# EUROPEAN PATENT SPECIFICATION

(11) **EP 2 930 267 B1**
(45) Date of publication and mention of the grant of the patent: **08.11.2017**
(21) Application number: 15162894.8
(22) Date of filing: 09.04.2015
(51) Int. Cl.: E01C 7/14, C04B 28/04

(54) **METHOD FOR PLACEMENT OF ROLLER COMPACTED CONCRETE (RCC) ON A SUB-BASE TO PRODUCE A CONCRETE PAVEMENT**
VERFAHREN ZUR PLATZIERUNG VON ROLLENKOMPAKTIERTEM BETON (RCC) AUF EINEM UNTERBAU ZUR HERSTELLUNG EINES BETONBODENBELAGS
PROCÉDÉ DE POSITIONNEMENT DE BÉTON COMPACTÉ PAR ROULEAU (RCC) SUR UNE EMBASE AFIN DE RÉALISER UNE CHAUSSÉE EN BÉTON

(30) Priority: 09.04.2014 WO PCT/EP2014/057144
(43) Date of publication of application: 14.10.2015
(73) Proprietor: Cemex Research Group AG, 2555 Brügg bei Biel (CH)
(72) Inventor: Zampini, Davide, 3250 Lyss (CH); Guerini, Alexandre, 2088 - Cressier (NE) (CH); Zanders, Carsten, 3252 Worben (CH); Volpatti, Giovanni, 2555 Aegerten (BE) (CH)
(74) Representative: Carvajal y Urquijo, Isabel

(56) References cited:
- GB-A- 2 390 847
- US-A- 4 892 586
- US-A- 5 173 117
- LIN YOUGUI ET AL: "A new mix design method for steel fibre-reinforced, roller compacted and polymer modified bonded concrete overlays", CONSTRUCTION AND BUILDING MATERIALS, vol. 48, 30 November 2013 (2013-11-30), pages 333-341, XP028736014, ISSN: 0950-0618, DOI: 10.1016/J.CONBUILDMAT.2013.06.020
- AMARNATH YERRAMALA ET AL: "Transport properties of high volume fly ash roller compacted concrete", CEMENT AND CONCRETE COMPOSITES, ELSEVIER APPLIED SCIENCE, BARKING, GB, vol. 33, no. 10, 30 July 2011 (2011-07-30) , pages 1057-1062, XP028313788, ISSN: 0958-9465, DOI: 10.1016/J.CEMCONCOMP.2011.07.010 [retrieved on 2011-08-22]
- K. Rendchen ET AL: "Erfahrung mit Verkehrsflächen aus Walzbeton in Deutschland", Aktuelles zum Thema Betonstrassen: update, 30 April 2006 (2006-04-30), pages 1-8, XP055159693, Retrieved from the Internet: URL:http://www.beton.org/fileadmin/beton-o rg/media/Dokumente/PDF/Service/Update/upda te_4_06_D.pdf [retrieved on 2014-12-19]

## Description

### FIELD OF THE INVENTION

The present invention relates to traditional Roller Compacted Concrete (RCC), a zero-slump concrete used in pavements as an alternative to asphalt. Particularly, the present invention relates to a method for placement of roller compacted concrete (RCC) on a sub-base to produce a pavement.

### BACKGROUND OF THE INVENTION

Nowadays, traditional Roller Compacted Concrete (RCC), a zero-slump concrete used in pavements as an alternative to asphalt, is mixed in a central mix plant or using a continuous flow pug mill. RCC is required to have zero-slump since the concrete mixture needs to support a roller on its unhardened state. For effective consolidation, the concrete mixture needs to be dry enough to prevent sinking of the roller or vibratory equipment but plastic/wet enough to allow satisfactory distribution of the binder during the mixing and vibratory compaction operations. The zero-slump consistency is the adequate for this aim. RCC is normally placed using an asphalt paver (widely available, cost effective and versatile with respect to the size and width of the road to build) and/or a roller or only a roller once the RCC concrete has been distributed evenly to compact the concrete on the sub-base.

Pug mills have been around since early 1800s and are a piece of machinery used to grind and mix wet and dry materials, usually clay or asphalt, but also for RCC. It is a mobile equipment, erected on site. Generally, a pug mill consists of one or more containers and one or more rotating arms with blades or paddles attached to them. It acts as a blender, forming a smooth material that is easy to work with.

Pug mills are used from mid-size to high-volume applications. Typical pug mill capacities range from 100 m³ to over 400 m³ per hour.

Central mix plants are equipped with their own mixer. However, zero-slump concrete is very problematic to extract from the mixer and is more difficult to clean, since it causes more buildup and requires longer cleaning time. When using a central mix, transportation of RCC is done through means of a dump truck.

Both methods need special equipment (pug mills or dump trucks), not readily available for most ready-mix producers, representing a heavy investment.

Also, an extra disadvantage presented by the pug mill is that, since it is a continuous method, one has little or no control over the mix proportioning - dosage of fine and coarse aggregates as well as of sand, cement and water -, leading to homogeneity consistency problems, yielding to a product poor in consistency, with differential shrinkages, cracks formations on the placed concrete etc.

The continuous pug mill is not suitable for small applications, since the continuous pug mill is employed in high-volume applications, typically having a capacity ranging from 100 to over 400 m³/hr. These capacities are far too much compared to what is needed for small projects, making RCC a poor choice for such jobs. For smaller projects, the ideal method would be using conventional equipment employed for ready-mix, however drum mixer trucks are not appropriated due to impossibility to discharge conventional RCC from the chute, due to its zero-slump consistency. For smaller capacities/projects, there is the need for a new solution.

Pugs are usually associated with special concrete pavers (not RCC) that are huge and expensive equipments designed for large and long highways with multi lanes in order to absorb the costs of such equipment. Concrete pavers normally would not require any post-process rolling.

Traditional ready-mix equipment encompasses:
- Wet mix plant, also called a central plant, where a concrete batch is made up by an operator before it is loaded into the truck. These plants have a mixer and offer producers more control over the quality and consistency of the concrete mix.
- Dry mix plants are plants without a mixer, where the dry components of concrete are weighted and loaded separately into a mixer, normally the concrete truck. Water is then added and the final mix is made. Once the water is added, the mixer starts to rotate to maintain the material's liquid state until it is ready to be discharged into the truck.
- Concrete trucks, also called in-transit mixers, are made to transport concrete to the jobsite while mixing it. They can be loaded in any of the mix plants mentioned above; they maintain the material's liquid state by turning the drum until delivery. The interior is fitted with a spiral blade which, in one rotational direction, pushes the concrete deeper into the drum (direction the drum rotates while transporting the concrete to the jobsite) and, turning on the other direction, discharges the concrete out of the drum. From there, the concrete can be unloaded by a chute or into a concrete pump.

But typical ready-mix equipment yields various problems and precludes their use for RCC nowadays:
- Discharging of a zero-slump concrete from a wet mixing plant, also known as central plant, is difficult, promotes buildup of material in the equipment, therefore longer cleaning procedures are needed.
- Dry mix plants (where the concrete truck is operating as a mixer) cannot be used directly since zero slump concrete could not be discharged from the concrete truck, making the downhill step of the pavement placing, including evenly distribution of the material and flattening with a roller, impossible.
- Delivery of a no zero-slump concrete is not accepted for RCC; a zero slump concrete is needed to comply with the final product's characteristics - the concrete mixture needs to be dry enough to prevent sinking of the roller or vibratory equipment but plastic/wet enough to allow satisfactory distribution of the binder during the placement, including homogeneously distribution of the material and/or vibration and rolling.

Therefore, neither dry mix or wet mixing plants and related concrete transportation equipment can be used to successfully achieve RCC delivery.

However, the use of conventional ready mix production and transportation would be ideal in terms of production capacity (4 to 100 m³ per hour) for smaller or shorter roads than highways and multilane roadways. Those smaller projects would use the nominal plant capacity and could not use the huge production related to pug mill technology. Furthermore, pug mill has to work permanently (no stop and restart) since the stoppage will affect the consistency, homogeneity of the mix and consequently, the final product's quality.

The ideal method would pass by using traditional ready-mix equipment, but due to the zero-slump consistency, it is very difficult if not impossible to unload the material from the ready-mix trucks.

Furthermore, zero slump concrete would require more sophisticated equipment to homogeneously distribute the concrete on the sub-base before compaction, typically said distribution is done using a dedicated paver.

A paver is a piece of equipment used to lay asphalt or zero-slump concrete on the sub-base when a pavement, road, bridge, parking lot or other such infrastructure is being built. It lays the asphalt or concrete flat and provides minor compaction before the roller.

A roller is a vehicle that compacts asphalt or concrete, but also soil or gravel during the construction of infrastructure using those said materials.

Existing inventions describe methods wherein residual, unset concrete is transformed into granular materials that can be used as aggregates. No invention has so far disclosed a method to granulate liquid, fresh concrete and further use this concrete as RCC or any additional application other than recycled aggregates.

JP 3147832 describes a material for the treatment of residual concrete which allows the recycling of remained concrete. The aforementioned material is made of a super-absorbing polymer in powder or granular form preserved in a casing formed of water-soluble paper.

When the material is added into the mixer where the residual concrete is, the casing of water-soluble paper dissolves and the super-absorbing polymer gets in contact with the residual concrete. Through the rotation of the mixer, the super-absorbing polymer absorbs part of the water present in the residual concrete and swells, forming a gel which contains cement and other fine particles. This arrangement covers the aggregates and produces a granular material which can be discharged from the mixer and used as a roadbed filling material.

JP 2009126761 discloses a flocculating agent for agglomeration of surplus ready-mix concrete in a drum and preventing the fluidity of the ready-mix concrete. The flocculating agent for agglomeration of surplus ready-mix comprises a polymer absorber as a dispersant which is selected from the group consisting of polyacrylics, polyvinylalcohols, polysaccharides and proteins and capable of absorbing water in a dispersive medium, including organic solvents, a salt solution or the like.

WO2012084716 describes a method for producing aggregates from unset residual concrete using both flash setting accelerators, which include calcium aluminate hydrates forming compounds and sodium silicates, plus a super absorbent polymer, specifically cellulose, chitosan, collagen and other synthetic polymers. Both these ingredients are mixed directly in the truck mixer until granular materials are formed. When the flash setting accelerators mentioned in the invention are added to the concrete surplus, they react with the water to form calcium aluminate hydrates; the consumption of these water molecules causes the drying of the residual concrete and a sharp reduction of the workability. Then, the superabsorbent polymer absorbs additional water molecules and swell, forming a gel network structure which incorporates cement, the calcium aluminate hydrates crystals and the other fine components of the concrete, like sand and fillers, forming a granular material.

Document LIN YOUGUI ET AL: "A new mix design method for steel fibre-reinforced, roller compacted and polymer modified bonded concrete overlays", CONSTRUCTION AND BUILDING MATERIALS, vol. 48, 38 November 2013 (2013-11-38), pages 333-341 discloses roller compacted concrete mixes used in pavements.

Document GB 2390847A discloses a method of delivering free-flowing concrete for foundation applications, which comprises two mixtures whereby the first and second mixtures are mixed together at site prior to application and whereby the concrete composition is transported from a plant to site in a truck-mixer drum.

Document AMARNATH YERRAMALA ET AL: "Transport properties of high volume fly ash roller compacted concrete", CEMENT AND CONCRETE COMPOSITES, ELSEVIER, APPLIED SCIENCE, BARKING, GB, vol. 33, no. 10, 30 July 2011 (2011-07-30), pages 1057-1062 describes research on the transport properties of high-volume fly ash roller compacted concrete (RCC).

Document US 4 892 586 discloses a concrete composition for use in a roller compacted placing method, wherein the composition includes a cement, an aggregate, an organic acid and/or a salt thereof and a set accelerating inorganic salt.

Document US 5 173 117 A discloses an additive for roller compacted concrete pavement. The additive is a hydrolyzable tannin compound used alone or in conjunction with a surface active agent.

Document K. Rendchen ET AL: "Erfahrungen mit Verkehrsflächen aus Walzbeton in Deutschland", Aktuelles zum Thema Betonstrassen: update, 30 April 2006 (2006-04-30), pages 1-8 discloses experiencies related to concrete.

It can be easily understood that the combination of admixtures in this case aims at accelerating the set of the concrete to produce hardened aggregates in the shortest time possible. Therefore, the present invention proposes a unique and novel method to use conventional ready mix equipment to mix and to deliver concrete to manufacture roller compacted concrete roads, using an asphalt paver or motor grader or a roller or any combination of them.

### DESCRIPTION OF THE INVENTION

The present invention provides a method for placement of roller compacted concrete (RCC) on a sub-base to produce a concrete pavement, comprising:
(a) dosing a concrete having a consistency selected from the group consisting of S1, S2, S3, S4 and S5 according to European Standard EN 206-1:2000 and loading said concrete into a concrete transportation truck,
(b) adding at least one pelletizing agent selected from the group consisting of cellulose, chitosan, polyacrylics, polyamines, polyvinylalcohols, polysaccharides, collagen, acrylamide, lactic acid, methacrylic acid, methacrylate, hydroxyethyl, ethylene glycol, ethylene oxide, acrylic acid, inorganic flocculants and inorganic coagulants to the concrete and waiting from 3 to 15 minutes under constant mixing to produce a pelletized concrete with a VEBE time classified as V0 to V2 according to European Standard EN 12350-3:2009 and
(c) discharging the pelletized concrete obtained in step (b) on the sub-base from the concrete transportation truck, rotating the drum of the concrete transportation truck,
   in the following, method of the invention.

Typical admixtures such as water reducers superplasticizers (e.g. based on melamine, naphthalene, lignosulfonate or polycarboxylates) can be used to optimize the consistency and the mix design.

For example, a S3 slump class concrete is a concrete that, after performing the concrete slump test, has a slump value between 100 and 150 mm.

An advantage of using not S0 concrete is related to the fact that more fluid concrete (S1-S5) enables a much better mixing of the ingredients, thus enabling to better distribute the cementitious material in mix and/or to incorporate various additions that will be homogeneously distributed into the mix (admixtures, mineral additions, fillers, fibers, etc.).

As a result, the quality and the strength development as well as the final strength and properties of the RCC placing method according to the invention are higher than in the case where S0 slump concrete is used.

Another advantage according to the invention is that the use of more fluid concrete mixes than S0 enables to either reduce the quantity of cementitious materials below 300 Kg/m³ of concrete, respectively below 280 Kg/m3 of concrete or to achieve higher resistances to allow higher speeds for the vehicles circulating on the finished pavement, to allow reducing the thickness of the RCC placed layer.

In step (c) of the method of the invention, the pellets can be placed with a paver, for example, the paver can be fed with the pelletized concrete directly from the concrete transportation truck.

The paver is optional, pellets can be poured from the concrete truck directly to the sub-base and then the roller finishes the job. Alternatively, pellets can be poured first into the paver that then pours the pellets on the road, before the roller acts. Another alternative is to unload the material directly from the concrete truck to the sub-base and use a motor grader or similar equipment to distribute evenly the concrete on the sub-base and finally compact the RCC with a roller.

Depending on the final quality of the road requested, the use of the asphalt paver enables to avoid the use of a roller.

Another advantage according to the invention is that the compaction of the concrete in the final pavement is typically located between 95 and 99% (1% - 5% of voids), whereas normal RCC is typically limited to compaction level lower than 95%. This advantage is related to the higher water-cement ratio used in the present invention, which provides a higher relative volume of paste.

Thus, another embodiment is the method of the invention, wherein the discharge of the pelletized concrete in step (c) is directly done on the sub-base and uniformly distributed manually or mechanically and pressed using a roller. The pelletized concrete could be uniformly distributed using a motor grader, which is a piece of machinery used in construction, more specifically used in creating flat surfaces and in preparing a base course for paved roads.

Another embodiment is the method of the invention, wherein the discharge of the pelletized concrete in step (c) is done into an asphalt paver.

Another embodiment is the method of the invention, wherein the concrete once placed on the sub-base is compacted using a roller.

The roller compacted concrete (RCC) of step (c) once pelletized should be classified as V0 to V2 according to European Standard EN 12350-3:2009 (corresponding to a VEBE time from 10 to 50 seconds). The VEBE time test is described in EN 12350-3:2009, Testing fresh concrete, Part 3: Vebe test.

The fresh concrete is compacted into a conical slump mould and placed on top of a vibrating table. The mould is removed and a clear plastic disc is placed on the top of the concrete. The vibration starts and the time taken for the transparent disc to be fully in contact with the concrete (the Vebe time), is measured.

The main advantage of this test is that it is a dynamic test and can be used on concretes that are too stiff for a slump test.

Concretes classified as V3 or V4 according to European Standard EN 12350-3:2009 (VEBE time below 10 seconds) are not suitable for the method of the present invention, said concretes will sink the roller once applied as RCC.

VEBE time is influenced by the consistency of the concrete of step (a) of the method of the invention and the amount of pelletizing agent. A concrete suitable for step (a) of the method of the invention has an initial paste volume with fillers (cement, water, fines) between 200 and 350 l/m³ and a mortar volume (paste + sand) (cement, water, sand and fines of the gravel (<4 mm)) between 500 and 700 l/m³. The ratio between paste volume/mortar volume is between 0.2 and 0.7.

The roller compacted concrete of step (c) has all the advantages of the traditional RCC with all the advantages of normal ready-mix concrete; it has the capability of being transported and discharged by normal ready-mix trucks, a familiar method that allows full control over the mix and complete adjustment of the product quantity to the constructors' requirements, even for small projects. After discharge, it can be applied as conventional RCC, using a conventional roller.

Pelletizing can be done during transportation as long as pellets are placed as road bed within 1 hour.

Typically, 1 m³ of fresh concrete described in step (a) of the method of the invention comprises 200-400 kg of a cementitious binder, said cementitious binder comprises between 60% to 100% of Ordinary Portland Cement (OPC), more preferably between 70% and 100% of OPC, and supplementary cementitious materials, including but not limited to slag, fly ash, silica fume and natural pozzolans. Furthermore, the fresh concrete described in step (a) is also comprised of aggregates, whereas said aggregates comprise 30-60% (% volume) of sand and 40-70% (% volume) of coarse aggregates. Furthermore, the fresh concrete described in step (a) is also comprised of 0.5% to 3% (w/w) of a superplasticizer (e.g. based on melamine, naphthalene, lignosulfonate or polycarboxylates) and also 0-2% (w/w) of a retarder (e.g., lignin, borax, sugars or tartaric acids and salts). The water-to-cement ratio of said concrete described in step (a) is between 0.4 and 0.6. In some cases, the fresh concrete described in step (a) may also have also 0.1 to 5% (w/w) of self-curing agent and/ or 0.1 to 5% (w/w) of an air-entraining agent. Addition of other mineral additives and/or fibers is also possible, since this embodiment will improve the dispersion and bonding of the fibers to the matrix. Fibers improve the durability of the final product by increasing the flexural strength, reducing shrinkage cracking and increasing fatigue strength.

Because the concrete of step (a) is not a zero-slump concrete, the present invention has the extra advantage when compared to the traditional RCC of allowing the use of self-curing and/or air-entraining agents.

Thus, another embodiment is the method of the invention, wherein the concrete of step (a) comprises a self-curing agent and/or an air-entraining agent.

Another embodiment is the method of the invention, wherein the solid active content of said self-curing agent is at a concentration in the range of 0.1 to 5% (w/w).

Another embodiment is the method of the invention, wherein said self-curing agent is selected from the group consisting of polyvalent alcohol, phytosterols, hyaluronic acid, polyxyethylene (POE), sodium pyrrolidone carboxylate (PCA-Na), cetyl alcohol, stearyl alcohol and poly-acrylic acid.

Another embodiment is the method of the invention, wherein said polyvalent alcohol is selected from the group consisting of polyethylene glycol (PEG), propylene glycol (PG), dipropylene glycol (DPG), butylene glycol, neopently glycol, xylitol, sorbitol and glycerine.

Another embodiment is the method of the invention, wherein the solid active content of said air-entraining agent is at a concentration in the range of 0.1 to 5% (w/w).

Another embodiment is the method of the invention, wherein said air-entraining agent is selected from the group consisting of salts of wood resins, salts of proteinaceous material, fatty acids, resinous acids, fatty salts, resinous salts, alkylbenzene sulfonate salts, salts of alkyl sulfonates, polyoxyethylene alkyl sulfonate salts, polyoxyethylene alkylaryl ethers, salts of sulfonated lignin and derivatives of hydrocarbon sulfonates.

Normally, after placing traditional RCC, curing is needed to avoid water loss and drying crack. Usually concrete curing is done by spraying or sprinkling water over the concrete surface to ensure that said surface is permanently moist. This prevents the concrete's moisture from evaporating, contributing to the strength gain of the product. By adding self-curing agents to the concrete of step (a), the extra step of curing can be avoided, saving resources and time.

Also, by adding an air-entraining agent, the final product has improved resistance to freeze-thaw when compared to traditional RCC products.

Addition of curing agents, fibers or air entrainers is only possible since the concrete, before pelletizing, has a consistency between S1 and S5.

Such additions would not be possible with a S0 conventional RCC concrete consistency due to the impossibility of homogeneously mixing said components.

The pelletizing operation of the concrete will entrap the fibers and/or the air bubbles resulting from the air entraining agent in the pellets, so that the expected properties are maintained until the concrete is placed with no risk of air losses or agglomeration of fibers.

All natural and artificial aggregates are suitable for the concrete of step (a) of the method of the invention, including but not limited to sands, gravels, quartz, expanded clay, shale, glass, lightweight aggregates, such as pumice, scoria, etc. Coarse aggregates can be round, angular, cubical, rounded, flaky, elongated whereas fine aggregates can be angular, rounded, etc.

Another embodiment is the method of the invention, wherein in step (b) the solid active content of the pelletizing agent is at a concentration in the range of 0.3 to 3 kg/m³ of concrete.

Preferably, the pelletizing agent is a polysaccharide. This component brings the advantages of being effective, easily available, non-toxic and non expensive.

Another embodiment is the method of the invention, wherein the pelletized concrete is used in repair works of existing concrete pavements. In such cases, the placing of the pelletized concrete does not require sophisticated pavers and can be done manually. Also, the use of a roller is not compulsory and compaction can be achieved using vibratory plates or even manually compacted. Example 6 below shows the typical characteristics of the concrete according to the invention to be used as repair material for concrete pavements. In such cases, the pelletization agent is preferably selected from, but not limited to, polysaccharides, in order to limit the mechanical resistance of the pellets to be compacted; the mix design preferably comprises a retarder with typical dosages 0.3% - 2%. The gravel to sand ratio is located between 0.8 - 1.3. The characteristic of the concrete for repair makes it suitable to perform various repair operations in different locations using the same batch for up to 6 hours, preferably up to 5 hours.

Another embodiment is the method of the invention, wherein reinforcement fibers are used in the concrete. Example 7 shows the difference between conventional reinforced concrete and a fiber reinforced concrete according to the invention. It can be seen from example 7 that the methodology according to the invention yields much better results in terms of residual flexural tensile strength, according to the norm EN-14651.

The methodology according to the invention enables to achieve higher residual tensile stress than a conventional RCC, using the same volume fraction of fibers. Also, it enables to achieve higher residual tensile stress when increasing the volume fraction of fibers, since the problem of fiber distribution and homogeneity in the normal RCC mix shows no effect or some low negative effects when increasing the amount of fibers.

The fibers used for reinforcement can be any metallic (for instance, selected from steel, stainless steel, zinc coated), inorganic (for instance, selected from glass, basalt, wollastonite) or organic fibers (for instance, selected from polyvinyl alcohol fiber (PVA fiber), polypropylene fiber (PP fiber), cellulose fiber (UF fiber), polyethylene fiber (PETF)), with length located between 5 mm and 120 mm. It is clear that the invention is not limited to any type or shape of fibers. Typical volume fraction of fibers is between 0.05% up to 10%, preferably between 0.1 % and 5%.

### LIST OF DEFINITIONS

Hydraulic binder. It is a material with cementing properties that sets and hardens due to hydration even under water. Hydraulic binders produce calcium silicate hydrates also known as CSH.

Cement. It is a binder that sets and hardens and brings materials together. The most common cement is the ordinary Portland cement (OPC) and a series of Portland cements blended with other cementitious materials.

Ordinary Portland cement. Hydraulic cement made from grinding clinker with gypsum. Portland cement contains calcium silicate, calcium aluminate and calcium ferroaluminate phases. These mineral phases react with water to produce strength.

Hydration. It is the mechanism through which OPC or other inorganic materials react with water to develop strength. Calcium silicate hydrates are formed and other species like ettringite, monosulfate, Portlandite, etc.

Mineral Addition. Mineral admixture (including the following powders: silica fume, fly ash, slags) added to concrete to enhance fresh properties, compressive strength development and improve durability.

Silica fume. Source of amorphous silicon obtained as a byproduct of the silicon and ferrosilicon alloy production. Also known as microsilica.

Fibers. Material used to increase concrete's structural performance. Fibers include: steel fibers, glass fibers, synthetic fibers and natural fibers.

Alumino silicate-by-product (Fly Ash - bottom ash). Alkali reactive binder components that together with the activator form the cementitious paste. These minerals are rich in alumina and silica in both, amorphous and crystalline structure.

Natural Pozzolan. Aluminosilicate material of volcanic origin that reacts with calcium hydroxide to produce calcium silicate hydrates or CSH as known in Portland cement hydration.

Filler inert. Material that does alter physical properties of concrete but does not take place in hydration reaction.

Admixture. Chemical species used to modify or improve concrete's properties in fresh and hardened state. These could be air entrainers, water reducers, set retarders, superplasticizers and others.

Silicate. Generic name for a series of compounds with formula Na₂O.nSiO₂. Fluid reagent used as alkaline liquid when mixed with sodium hydroxide. Usually sodium silicate but can also comprise potassium and lithium silicates. The powder version of this reagent is known as metasilicates and could be pentahydrates or nonahydrates. Silicates are referred as Activator 2 in examples in this application.

Initial dispersant. It is a chemical admixture used in hydraulic cement compositions such as Portland cement concrete, part of the plasticizer and superplasticizer familiy, which allow a good dispersion of cement particles during the initial hydration stage.

Superplasticizers. It relates to a class of chemical admixture used in hydraulic cement compositions such as Portland cement concrete having the ability to highly reduce the water demand while maintaining a good dispersion of cement particles. In particular, superplasticizers avoid particle aggregation and improve the rheological properties and workability of cement and concrete at the different stage of the hydration reaction.

Coarse Aggregates. Manufactured, natural or recycled minerals with a particle size greater than 8 mm and a maximum size lower than 32 mm.

Fine Aggregates. Manufactured, natural or recycled minerals with a particle size greater than 4 mm and a maximum size lower than 8 mm.

Sand. Manufactured, natural or recycled minerals with a particle size lower than 4mm.

Concrete Ingredients. Concrete is primarily a combination of hydraulic binder, sand, fine and/or coarse aggregates, water. Admixture can also be added to provide specific properties such as flow, lower water content, acceleration, etc.

Workability. The workability of a material is measured with a slump test (see below).

Workability retention. It is the capability of a mix to maintain its workability during the time. The total time required depends on the application and the transportation.

Strength development - setting / hardening. The setting time starts when the construction material changes from plastic to rigid. In the rigid stage the material cannot be poured or moved anymore. After this phase the strength development corresponding to the hardening of the material.

Consistency of the concrete. Consistency reflects the rheological properties of fresh concrete by means of slump as defined below:

**Table 1. Consistency of concrete (slump)**

| EN 206-1 | | NF P 18-305 | |
|---|---|---|---|
| Class | slump [mm] | Consistency | slump [mm] |
| S1 | 10 to 40 | Stiff | 0 to 40 |
| S2 | 40 to 90 | Plastic | 50 to 90 |
| S3 | 100 to 150 | highly plastic | 100 to 150 |
| S4 | 16 to 210 | fluid | > 160 |
| S5 | > 220 | | |

### BRIEF DESCRIPTION OF THE FIGURES

Figure 1. Slump values of a concrete over time.
Figure 2. VEBE time determined according to European Standard EN 12350-3:2009 for concretes with different amounts of pelletizing agent.
Figure 3. VEBE time determined according to European Standard EN 12350-3:2009 for concretes with different amounts of pelletizing agent.
Figure 4. Detection of Pellets in concrete after adding a pelletizing agent.

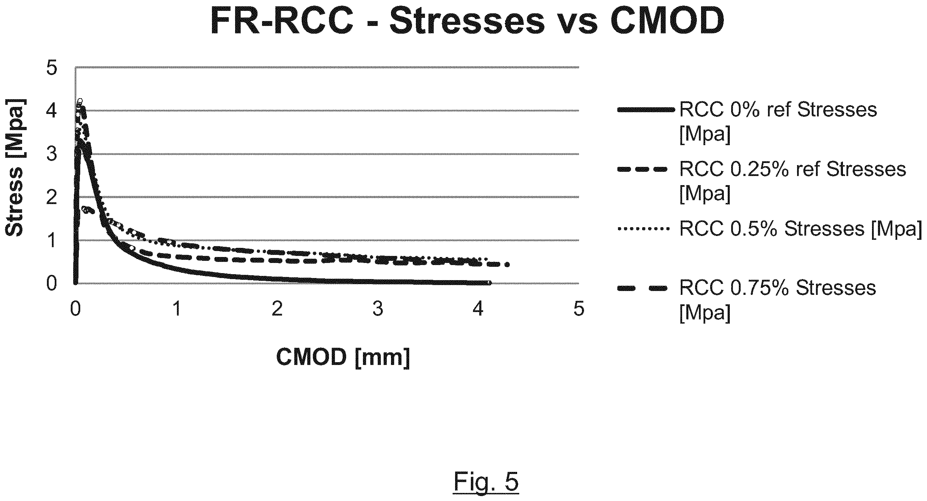

Figure 5. Stresses vs CMOD results.

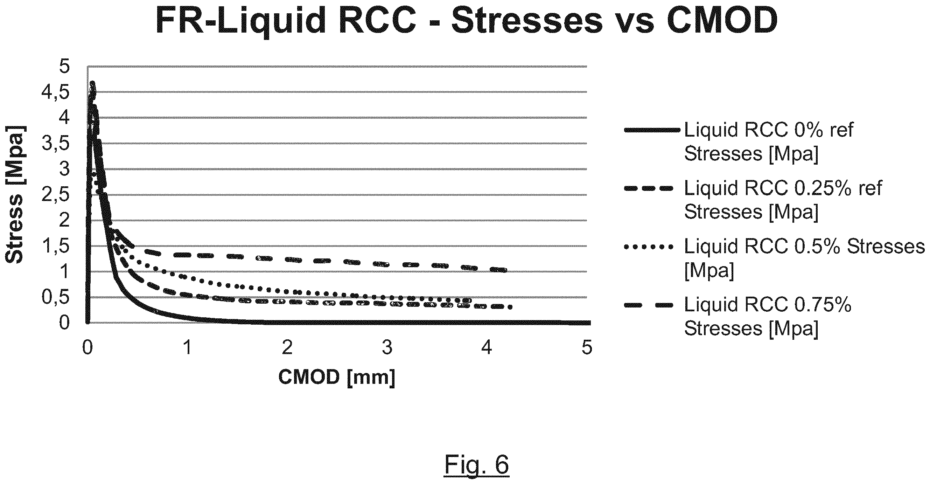

Figure 6. Stresses vs CMOD results.

### EXAMPLES OF THE INVENTION

### Example 1

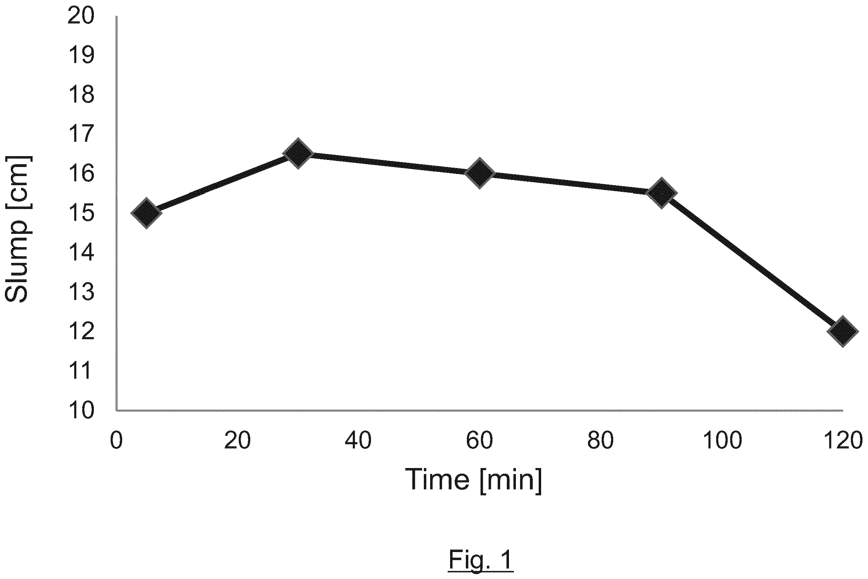

S3 slump class concrete was produced and the slump was monitored over time. The results are shown on Figure 1.

### Example 2

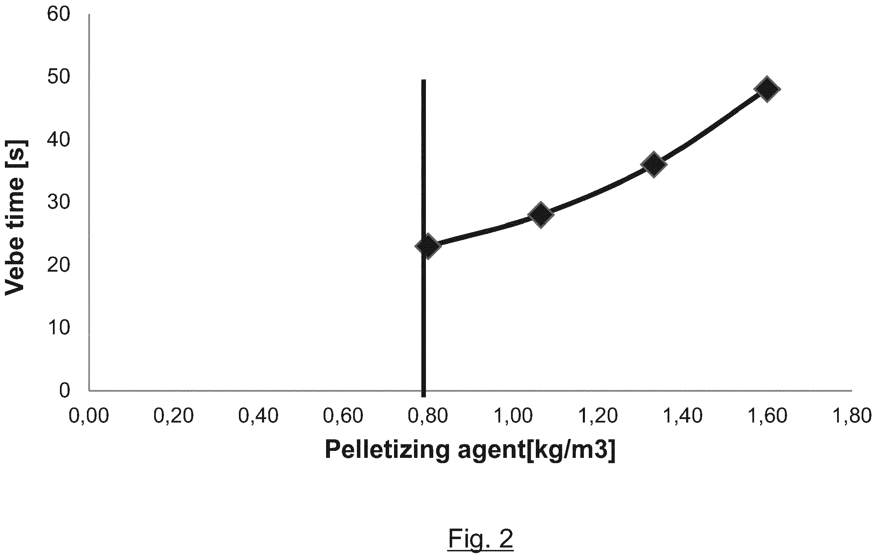

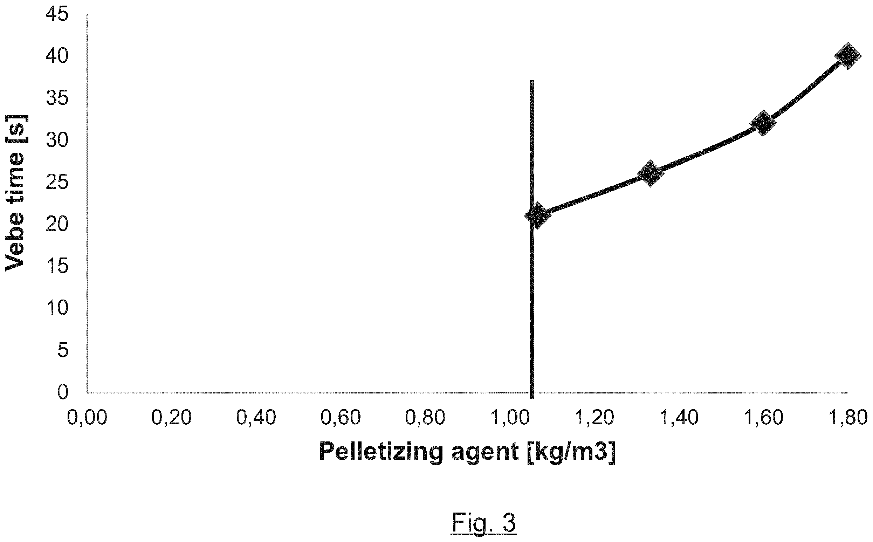

S3 slump class concrete was produced, and different amounts of the pelletizing agent were then added. The VEBE time was determined according to European Standard EN 12350-3:2009 for all concretes and the results are shown in Figures 2 and 3.

**Mix design**

| | |
|---|---|
| Cement CEM OPC Optimo 40 R | 230 kg/m³ |
| Water addition | 146 kg/m³ |
| Superplasticizer (PCE) | 2.3 kg/m³ |
| Air-Entrainer (Vinsol Resin) | 2% (w/w) |
| Sand | 912 kg/m³ |
| ¾ inch Aggregate | 1.184 kg/m³ |

### Example 3

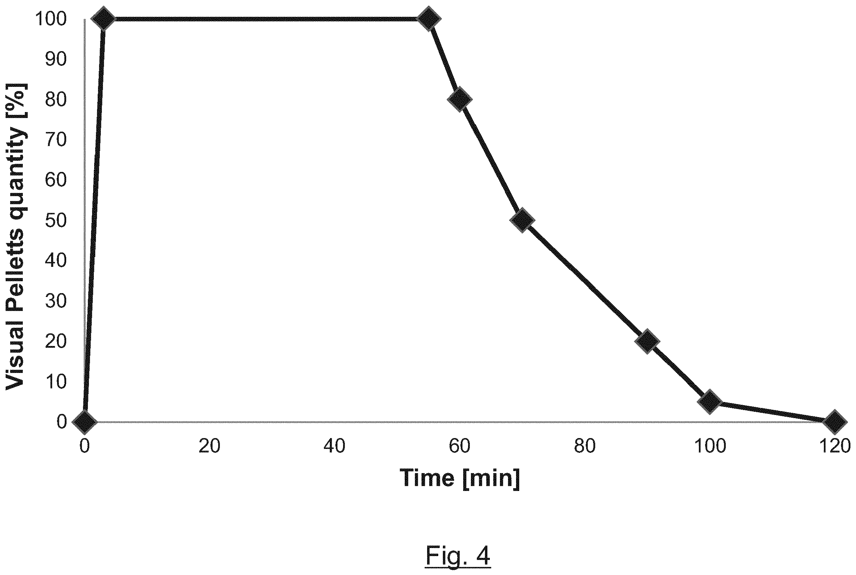

S3 slump class concrete with self-curing agent was produced, and the pelletizing agent was then added. The appearance of visual pellets in the concrete was detected over time and the results are shown in Figure 4.

**Mix design**

| **Raw Material** | **kg/m3** |
|---|---|
| CEM I | 300 |
| w/c | 0.54 |
| 0/4 round | 889 |
| 4/8 crushed | 719 |
| 8/11 crushed | 339 |
| Superplasticizer (PCE) | 3.67 |
| Self-curing agent (PEG) | 3 |
| Polysaccharide | 1.333 |

The pellets were discharged from the drum of the concrete truck and poured directly into the sub-base. A roller compacted said pellets to finish the job. Due to the use of a self-curing agent, no need for posterior curing was needed.

### Example 4

7 m³ of concrete were produced at a ready-mix plant and introduced in a concrete truck. This concrete had the following composition:
- 1.260 kg of cement CEM OPC Optimo 40 R
- 490 kg fly ash
- 18.2 kg superplasticizer (polycarboxylate ether-based (PCE))
- 6.398 kg sand
- 8.316 kg aggregates (1.9 cm size)

0.917 m³ of water were then added to the concrete truck and rotation of the drum started in order to mix the concrete. This concrete had a theoretical density of 2.465. The truck transports the concrete to the jobsite with permanent rotation of the drum. The jobsite was situated 40 min away from the ready-mix plant, therefore the pelletizing agent was only added at the jobsite. At the jobsite, 9.1 kg of pelletizing agent were added to the drum and mixed for 4 minutes with the concrete mix. During these 4 minutes, a clear change of the concrete consistency was observed - the fluid concrete was substituted by a granular material inside the truck. By reversing the movement of the drum, this granular material was discharged from the truck and placed into the paver that placed the granular materials as road bed, following the traditional procedure for normal RCC. After, the concrete was compacted using a traditional roller.

### Example 5

4 m³ of concrete were prepared at a central-mix plant with the following mix design:

| Ordinary Portland Cement [Kg/m³] | Fly ash [kg/m³] | w/c | Superplasticizer (w/w) | Sand (% vol) | Coarse Aggregate (% vol) |
|---|---|---|---|---|---|
| 190 | 60 | 0.60 | 0.60% | 47% | 53% |

The blend is pre-mixed in the central plant and discharged into the concrete truck which continues the mixing. Because the jobsite is only 5 minutes away from the central mix, pelletizing agent is also added at the plant, before the truck leaves to the jobsite. Once arrived at the jobsite, the drum is already filled with granular material, which is then discharged directly into the sub-base. Once placed, the roller compacts the concrete, finishing the process.

### Example 6

In order to perform a repair work, namely to cover a hole that appeared on the concrete pavement, liquid RCC was tested.

The mix design used was as follows:

| **Raw Material** | **Unit** | **Quantity** |
|---|---|---|
| CEM I 52.5 R | kg/m3 | 300 |
| water | kg/m3 | 180 |
| w/c efficient | - | 0.55 |
| w/c real | - | 0.6 |
| 0/4 round (sand) | kg/m3 | 871 |
| 4/8 crushed (gravel 1) | kg/m3 | 704 |
| 8/11 crushed (gravel 2) | kg/m3 | 332 |
| Superplasticizer (PCE) | % on weight of cem | 1.25 |
| Retarder | % on weight of cem | 0.3 |
| | | |
| Polysaccharide | kg/m3 | 0.75 |

The gravel, cement, water, superplasticizer and retarder were mixed together during 3 minutes at the job site. The pelletizing agent was then added and the components were further mixed during 5 minutes. Pellets were formed during this period.

The pellets formed were then poured from the bucket into the hole to achieve a layer of 3-4 cm. The concrete was then spread with a rake in order to achieve a uniform height. The final compactation was then performed manually, with the help of a shovel.

The properties of the concrete were as follows:

| **Fresh characterization** | | |
|---|---|---|
| **Type** | **Unit** | **Quantity** |
| Air content before pellettization | % | 2.3 |
| Density | kg/m3 | 2370 |
| Slump before pellettization | mm | 120 |
| Slump after pellettization | mm | 0 |
| VEBE after pellettization | sec | 32 |

| **Hardened characterization** | | |
|---|---|---|
| **Type** | **Unit** | **Quantity** |
| Compressive strength (28 days) | Mpa | 34 |
| Compressive strength (140 days) | Mpa | 39 |

### Example 7

Reinforcement fibers were tested in conventional RCC and the liquid RCC produced according to the method of the invention. This example was performed according to the norm EN-14651 Precast concrete products - Test Method for metallic fibre concrete - measuring the flexural tensile strength.

In the following tables, it can be seen the mix designs and both the fresh characterization and the hardened characterization of the concretes used.

| **CONVENTIONAL RCC** | | |
|---|---|---|
| | | |
| **Raw Material** | **Unit** | **Quantity** |
| Cem I 52.5 R | kg/m3 | 300 |
| water | kg/m3 | 133 |
| w/c efficient | - | 0.38 |
| w/c real | - | 0.44 |
| 0/4 round (sand) | kg/m3 | 925 |
| 4/8 crushed (gravel 1) | kg/m3 | 747 |
| 8/11 crushed (gravel 2) | kg/m3 | 352 |
| Superplasticizer (PCE) | % on weight of cem | - |
| Retarder | % on weight of cem | - |
| | | |
| Pellettizing agent (flocculant) | kg/m3 | - |
| | | |

| **Fresh characterization** | | |
|---|---|---|
| **Type** | **Unit** | **Quantity** |
| Density | kg/m3 | 2450 |
| Slump | mm | 0 |
| VEBE | sec | 31 |
| | | |
| | | |
| | | |

| **Hardened characterization of the concrete matrix** | | |
|---|---|---|
| **Type** | **Unit** | **Quantity** |
| Compressive strength (28 days) | Mpa | 32 |
| Flexural strength (28 days) | Mpa | 3.7 |

| **LIQUID RCC** | | |
|---|---|---|
| **Raw Material** | **Unit** | **Quantity** |
| Cem I 52.5 R | kg/m3 | 300 |
| water | kg/m3 | 180 |
| w/c efficient | - | 0.55 |
| w/c real | - | 0.6 |
| 0/4 round (sand) | kg/m3 | 871 |
| 4/8 crushed (gravel 1) | kg/m3 | 704 |
| 8/11 crushed (gravel 2) | kg/m3 | 332 |
| Superplasticizer (PCE) | % on weight of cem | 1.25 |
| Retarder | % on weight of cem | 0.3 |
| | | |
| Pellettizing agent (flocculant) | kg/m3 | 0.75 |
| | | |

| **Fresh characterization** | | |
|---|---|---|
| **Type** | **Unit** | **Quantity** |
| Air content before pellettization | % | 2.3 |
| Density | kg/m3 | 2370 |
| Slump before pellettization | mm | 120 |
| Slump after pellettization | mm | 0 |
| VEBE after pellettization | sec | 32 |
| | | |

| **Hardened characterization of the concrete matrix** | | |
|---|---|---|
| **Type** | **Unit** | **Quantity** |
| Compressive strength (28 days) | Mpa | 34 |
| Flexural strength (28 days) | Mpa | 4 |

For each concrete, 4 mixes were done, each with different fiber content:

| **Fibers** | | |
|---|---|---|
| **Mix** | **Fiber type** | **Dosage [%volume]** |
| 1 | Polyolefin | 0 |
| 2 | Polyolefin | 0.25 |
| 3 | Polyolefin | 0.5 |
| 4 | Polyolefin | 0.75 |

The characteristics of the fiber used are shown in the following table:

| **Characteristics of the fibers** | | |
|---|---|---|
| **Characteristic** | **Unit** | **Value** |
| Material | - | Polyolefin |
| Density | kg/m3 | 910 |
| Tensile strength | Mpa | 618 |
| E modulus | Gpa | >10 |
| Lenght | mm | 50 |

| | | |
|---|---|---|
| l/d | - | 90 |

Therefore, a total of 8 samples were produced.

The results for the flexural tensile strength are shown in the following table (hardened characterization of the concrete samples done according to the norm EN-14651 - 3PBT):

| **Conventional RCC** | | | | |
|---|---|---|---|---|
| | **RCC - 0% ref** | **RCC - 0.25%** | **RCC - 0.5%** | **RCC - 0.75%** |
| **Fiber [%vol]** | **0%** | **0.25%** | **0.50%** | **0.75%** |
| fL [Mpa] | 3.3 | 4.25 | 3.72 | 1.85 |
| f1 [Mpa] | 0.78 | 0.88 | 1.19 | 1.27 |
| f2 [Mpa] | 0.17 | 0.55 | 0.79 | 0.79 |
| f3 [Mpa] | 0.06 | 0.53 | 0.68 | 0.65 |
| f4 [Mpa] | 0.02 | 0.48 | 0.59 | 0.54 |
| Energy [N/mm] | 1.54 | 3.2 | 3.79 | 3.37 |

| **Liquid RCC** | | | | |
|---|---|---|---|---|
| | **Liquid RCC - 0% ref** | **Liquid RCC - 0.25%** | **Liquid RCC - 0.5%** | **Liquid RCC - 0.75%** |
| **Fiber [%vol]** | **0%** | **0.25%** | **0.50%** | **0**.**75**% |
| fL [Mpa] | 3.91 | 4.56 | 2.92 | 4.67 |
| f1 [Mpa] | 0.39 | 0.88 | 1.21 | 1.45 |
| f2 [Mpa] | 0.02 | 0.45 | 0.71 | 1.29 |
| f3 [Mpa] | 0 | 0.39 | 0.55 | 1.21 |
| f4 [Mpa] | 0 | 0.35 | 0.46 | 1.12 |
| Energy [N/mm] | 1.03 | 2.79 | 3.38 | 5.79 |

## Claims

1. Method for placement of roller compacted concrete (RCC) on a sub-base to produce a concrete pavement, **characterized in that** it comprises:
(a) dosing a concrete having a consistency selected from the group consisting of S1, S2, S3, S4 and S5 according to European Standard EN 206-1:2000 and loading said concrete into a concrete transportation truck,
(b) adding at least one pelletizing agent selected from the group consisting of cellulose, chitosan, polyacrylics, polyamines, polyvinylalcohols, polysaccharides, collagen, acrylamide, lactic acid, methacrylic acid, methacrylate, hydroxyethyl, ethylene glycol, ethylene oxide, acrylic acid, inorganic flocculants and inorganic coagulants to the concrete and waiting from 3 to 15 minutes under constant mixing to produce a pelletized concrete with a VEBE time classified as V0 to V2 according to European Standard EN 12350-3:2009 and
(c) discharging the pelletized concrete obtained in step (b) on the sub-base from the concrete transportation truck, rotating the drum of the concrete transportation truck.

2. Method according to claim 1, **characterized in that** the discharge of the pelletized concrete in step (c) is directly done on the sub-base and uniformly distributed manually or mechanically and pressed using a roller.

3. Method according to claim 1, **characterized in that** the discharge of the pelletized concrete in step (c) is done into an asphalt paver.

4. Method according to any one of claims 1 or 3, **characterized in that** the concrete once placed on the sub-base is compacted using a roller.

5. Method according to any one of claims 1 to 4, **characterized in that** the concrete of step (a) comprises a self-curing agent and/or an air-entraining agent.

6. Method according to claim 5, **characterized in that** the solid active content of said self-curing agent is at a concentration in the range of 0.1 to 5% (w/w).

7. Method according to any one of claims 5 or 6, **characterized in that** said self-curing agent is selected from the group consisting of polyvalent alcohol, phytosterols, hyaluronic acid, polyxyethylene (POE), sodium pyrrolidone carboxylate (PCA-Na), cetyl alcohol, stearyl alcohol and poly-acrylic acid.

8. Method according to claim 7, **characterized in that** said polyvalent alcohol is selected from the group consisting of polyethylene glycol (PEG), propylene glycol (PG), dipropylene glycol (DPG), butylene glycol, neopently glycol, xylitol, sorbitol and glycerine.

9. Method according to any one of claims 5 to 8, **characterized in that** the solid active content of said air-entraining agent is at a concentration in the range of 0.1 to 5% (w/w).

10. Method according to any one of claims 5 to 9, **characterized in that** said air-entraining agent is selected from the group consisting of salts of wood resins, salts of proteinaceous material, fatty acids, resinous acids, fatty salts, resinous salts, alkylbenzene sulfonate salts, salts of alkyl sulfonates, polyoxyethylene alkyl sulfonate salts, polyoxyethylene alkylaryl ethers, salts of sulfonated lignin and derivatives of hydrocarbon sulfonates.

11. Method according to any one of claims 1 to 10, **characterized in that** in step (b) the solid active content of the pelletizing agent is at a concentration in the range of 0.3 to 3 kg/m³ of concrete.

12. Method according to any one of claims 1, 2, 5 or 11, **characterized in that** the concrete of step (a) comprises fibers.

## Patentansprüche

1. Verfahren zur Anordnung von Walzbeton (RCC) auf einer Teilgrundfläche zum Erzeugen eines Beton-Bodenbelags, **dadurch gekennzeichnet, dass** es umfasst:
(a) Dosieren eines Betons, der eine Konsistenz aufweist, die ausgewählt ist aus der Gruppe, bestehend aus S1, S2, S3, S4 und S5 gemäß dem Europäischen Standard EN 206-1:2000 und Laden des Betons in einen Beton-Transportwagen,
(b) Zugeben mindestens eines Pelletisierungsmittels, das ausgewählt ist aus der Gruppe, bestehend aus Cellulose, Chitosan, Polyacrylen, Polyaminen, Polyvinylalkoholen, Polysacchariden, Collagen, Acrylamid, Milchsäure, Methacrylsäure, Methacrylat, Hydroxyethyl, Ethylenglycol, Ethylenoxid, Acrylsäure, anorganischen Flockungsmitteln und anorganischen Gerinnungsmitteln zu dem Beton und Warten von 3 bis 15 bei konstantem Mischen zum Erzeugen eines pelletisierten Betons mit einer VEBE-Zeit, die als V0 bis V2 gemäß Europäischem Standard EN 12350-3:2009 und
(c) Entladen des in Schritt (b) erhaltenen Betons auf die Teilgrundfläche aus dem Beton-Transportwagen, Drehen der Trommel des Beton-Transportwagens.

2. Verfahren nach Anspruch 1, **dadurch gekennzeichnet, dass** die Entladung des pelletisierten Betons in Schritt (c) direkt auf die Teilgrundfläche erfolgt und gleichmäßig manuell oder mechanisch verteilt und mit einer Walze gepresst wird.

3. Verfahren nach Anspruch 1, **dadurch gekennzeichnet, dass** die Entladung des pelletisierten Betons in Schritt (c) in einem Asphaltfertiger erfolgt.

4. Verfahren nach einem der Ansprüche 1 oder 3, **dadurch gekennzeichnet, dass** der Beton, sobald er auf der Teilgrundfläche platziert wurde, mit einer Walze verdichtet wird.

5. Verfahren nach einem der Ansprüche 1 bis 4, **dadurch gekennzeichnet, dass** der Beton aus Schritt (a) selbsthärtendes Mittel und/oder einen Luftporenbildner umfasst.

6. Verfahren nach Anspruch 5, **dadurch gekennzeichnet, dass** der feste Wirkstoffgehalt des selbsthärtenden Mittels bei einer Konzentration im Bereich von 0,1 bis 5 Gew.-% liegt.

7. Verfahren nach einem der Ansprüche 5 oder 6, **dadurch gekennzeichnet, dass** das selbsthärtende Mittel ausgewählt ist aus der Gruppe, bestehend aus mehrwertigem Alkohol, Phytosterolen, Hyaluronsäure, Polyxyethylen (POE), Natriumpyrrolidoncarboxylat (PCA-Na), Cetyl-Alkohol, Stearyl-Alkohol und Polyacrylsäure.

8. Verfahren nach Anspruch 7, **dadurch gekennzeichnet, dass** der polyvalente Alkohol ausgewählt ist aus der Gruppe, bestehend aus Polyethylenglycol (PEG), Propylenglycol (PG), Dipropylenglycol (DPG), Butylenglycol, Neopentylglycol, Xylitol, Sorbitol und Glycerin.

9. Verfahren nach einem der Ansprüche 5 bis 8, **dadurch gekennzeichnet, dass** der feste Wirkstoffgehalt des Luftporenbildners bei einer Konzentration im Bereich von 0,1 bis 5 Gew.-% liegt.

10. Verfahren nach einem der Ansprüche 5 bis 9, **dadurch gekennzeichnet, dass** der Luftporenbildner ausgewählt ist aus der Gruppe, bestehend aus Salzen von Holzharzen, Salzen aus proteinhaltigem Material, Fettsäuren, Harzsäuren, Fettsalzen, Harzsalzen, Alkylbenzolsulfonatsalzen, Salzen von Alkylsulfonaten, Polyoxyethylenalkylsulfonatsalzen, Polyoxyethylenalkylarylethern, Salzen von sulfoniertem Lignin und Derivaten von Kohlenwasserstoffsulfonaten.

11. Verfahren nach einem der Ansprüche 1 bis 10, **dadurch gekennzeichnet, dass** in Schritt (b) der feste Wirkstoffgehalt des Pelletisierungsmittels bei einer Konzentration im Bereich von 0,3 bis 3 kg/m³ Beton liegt.

12. Verfahren nach einem der Ansprüche 1, 2, 5 oder 11, **dadurch gekennzeichnet, dass** der Beton von Schritt (a) Fasern umfasst.

## Revendications

1. Procédé de pose de béton compacté au rouleau (RCC) sur une sous-base pour produire une chaussée en béton, **caractérisé en ce qu'**il comprend :
(a) le dosage d'un béton ayant une consistance choisie du groupe constitué de S1, S2, S3, S4 et S5, selon la norme européenne EN 206-1 : 2000 et le chargement dudit béton dans un camion de transport de béton,
(b) l'ajout, d'au moins, un agent de granulation choisi dans le groupe constitué de cellulose, chitosane, polyacryliques, polyamines, alcools polyvinyliques, polysaccharides, collagène, acrylamide, acide lactique, acide méthacrylique, méthacrylate, hydroxyéthyle, éthylène glycol, oxyde d'éthylène, acide acrylique, floculants inorganiques et coagulants inorganiques au béton et l'attente, de 3 à 15 minutes, sous un mélange constant, pour produire un béton granulé avec un temps VEBE classé de V0 à V2, selon la norme européenne EN 12350-3 : 2009 et
(c) la décharge du béton granulé obtenu à l'étape (b) sur la sous-base du camion de transport de béton, faisant tourner le tambour du camion de transport de béton.

2. Procédé selon la revendication 1, **caractérisé en ce que** la décharge du béton granulé dans l'étape (c) est directement réalisée sur la sous-base et est répartie uniformément, manuellement ou mécaniquement, et pressée à l'aide d'un rouleau.

3. Procédé selon la revendication 1, **caractérisé en ce que** la décharge du béton granulé dans l'étape (c) est effectuée dans une asphalteuse.

4. Procédé selon l'une quelconque des revendications 1 ou 3, **caractérisé en ce que** le béton, une fois posé sur la sous-base, est compacté à l'aide d'un rouleau.

5. Procédé selon l'une quelconque des revendications 1 à 4, **caractérisé en ce que** le béton de l'étape (a) comprend un agent auto-durcisseur et/ou un agent entraîneur d'air.

6. Procédé selon la revendication 5, **caractérisé en ce que** le contenu actif solide dudit agent auto-durcisseur a une concentration dans la plage de 0,1 à 5 % (p/p).

7. Procédé selon l'une quelconque des revendications 5 ou 6, **caractérisé en ce que** ledit agent auto-durcisseur est choisi du groupe constitué d'alcool polyvalent, phytostérols, acide hyaluronique, polyéthylène (POE), carboxylate de pyrrolidone sodique (PCA-Na), alcool cétylique, alcool stéarylique et acide polyacrylique.

8. Procédé selon la revendication 7, **caractérisé en ce que** ledit alcool polyvalent est choisi du groupe constitué de polyéthylène glycol (PEG), propylène glycol (PG), dipropylène glycol (DPG), butylène glycol, néopentyle glycol, xylitol, sorbitol et glycérine.

9. Procédé selon l'une quelconque des revendications 5 à 8, **caractérisé en ce que** le contenu actif solide dudit agent entraîneur d'air a une concentration dans la plage de 0,1 à 5 % (p/p).

10. Procédé selon l'une quelconque des revendications 5 à 9, **caractérisé en ce que** ledit agent entraîneur d'air est choisi dans le groupe constitué de sels de résines de bois, sels de matériaux protéinés, acides gras, acides résineux, sels gras, sels résineux, sels alkylbenzène sulfonates, sels d'alkyl sulfonates, sels d'alkyl sulfonates de polyoxyéthylène, éthers alkylaryles de polyoxyéthylène, sels de lignine sulfonée et dérivés de sulfonates d'hydrocarbures.

11. Procédé selon l'une quelconque des revendications 1 à 10, **caractérisé en ce qu'**à l'étape (b), le contenu actif solide de l'agent de granulation a une concentration dans la plage de 0,3 à 3 kg/m³ de béton.

12. Procédé selon l'une quelconque des revendications 1, 2, 5 ou 11, **caractérisé en ce que** le béton de l'étape (a) comprend des fibres.
